# EUROPEAN PATENT SPECIFICATION

(11) **EP 3 106 953 B1**
(45) Date of publication and mention of the grant of the patent: **26.02.2020**
(21) Application number: 16175133.4
(22) Date of filing: 17.06.2016
(51) Int. Cl.: G05B 23/02

(54) **SELF-LEARNING CONTROL SYSTEM OF A GAS TURBINE AND METHOD FOR CONTROLLING A GAS TURBINE**
SELBSTLERNENDES STEUERUNGSSYSTEM EINER GASTURBINE UND VERFAHREN ZUR STEUERUNG EINER GASTURBINE
SYSTÈME DE COMMANDE D'AUTO-APPRENTISSAGE D'UNE TURBINE À GAZ ET PROCÉDÉ DE COMMANDE D'UNE TURBINE À GAZ

(30) Priority: 17.06.2015 IT UB20151441
(43) Date of publication of application: 21.12.2016
(73) Proprietor: Ansaldo Energia S.p.A., 16152 Genova (IT)
(72) Inventor: PESENTI, Alice Virginia, 16152 Genova (IT); COSTA, Paolo, 16126 Genova (IT); TRIPEPI, Domenico, 16152 Genova (IT)
(74) Representative: Bernotti, Andrea

(56) References cited:
- EP-A2- 1 630 633
- US-A1- 2006 064 291
- US-A1- 2013 060 524
- US-B1- 7 050 935

## Description

The present invention relates to a self-learning control system of a gas turbine and to a method for controlling a gas turbine.

As already known, the control of a gas turbine of a plant for the production of electricity has very complex aspects, both relating to the performance and the compliance with regulations concerning the environmental protection, and relating to the need to preserve the efficiency of the machine and of its components to avoid their premature degradation and, above all, any potentially disastrous malfunction.

For example, a proper control of the combustion conditions is essential for maintaining a high level of efficiency and, at the same time, containing the polluting emissions within the increasingly strict limits required by law. Bad combustion conditions can also cause serious damage to the machine structure. In fact, certain instable conditions can cause a vibration of the combustion chamber ("humming"), which can be stressed at a certain resonance frequency. An event of this type can be particularly harmful to the inner heat-insulating coating of the combustion chamber, normally made up of contiguous ceramic tiles. The vibrations of the combustion chamber can easily damage the heat-insulating coating, which therefore requires a more frequent maintenance than would be desirable. Moreover, despite a constant maintenance, the heat-insulating coating can lose its effectiveness and no longer be able to provide an adequate protection to the metal casing of the combustion chamber, where a serious, even irreversible, damage can thus occur.

Other critical events, such as excessive levels of polluting emissions, cannot in themselves be dangerous for the machine, but they are to be avoided both to comply with laws and regulations and because the machine efficiency is significantly degraded.

The known control systems provide for corrective actions altering the operating conditions of the gas turbine in response to the onset of a critical event. For example, if mechanical vibrations of the combustion chamber casing have been detected beyond a permissible range, the control system can intervene on the fuel supply to alter the conditions of the flame and, consequently, bring the oscillation back within accepted limits.

The allowed interventions are however relatively late, because they allow remedying only after that the critical conditions have occurred and have been identified. It would instead be desirable to prevent the critical conditions or at least operate with greater promptness.

According to US 2013/060524 A1, in a method for detecting an anomaly in a machine under test operational data from a control unit of the machine under test are monitored. An operational state of the machine under test is identified based on the monitored operational data. A model corresponding to the identified operational state of the machine under test is used to identify one or more key parameters and corresponding normal operating ranges for each determined key parameter. The method determines when a key parameter is not within its corresponding normal operating range based on the monitored data. Other examples of known methods are disclosed in EP 10630 633 A2 and in US 2006/064291 A1.

The object of the present invention is therefore to provide a control system of a gas turbine and a method for controlling a gas turbine that can overcome the aforesaid limitations and, in particular, facilitate the prevention of critical events.

The present invention provides a control system of a gas turbine and a method for controlling a gas turbine as defined, respectively, in claims 1 and 16.

The present invention will now be described with reference to the accompanying drawings, which illustrate a non-limiting embodiment, in which:
- Figure 1 is a simplified block diagram of a gas turbine plant for the production of electricity;
- Figure 2 is a more detailed block diagram of a part of the plant of Figure 1, incorporating a control system according to an embodiment of the present invention;
- Figure 3 is a schematic representation of a database of the control system of Figure 2;
- Figure 4 is a schematic representation of another database of the control system of Figure 2; and
- Figure 5 is a schematic representation of a further database of the control system of Figure 2.

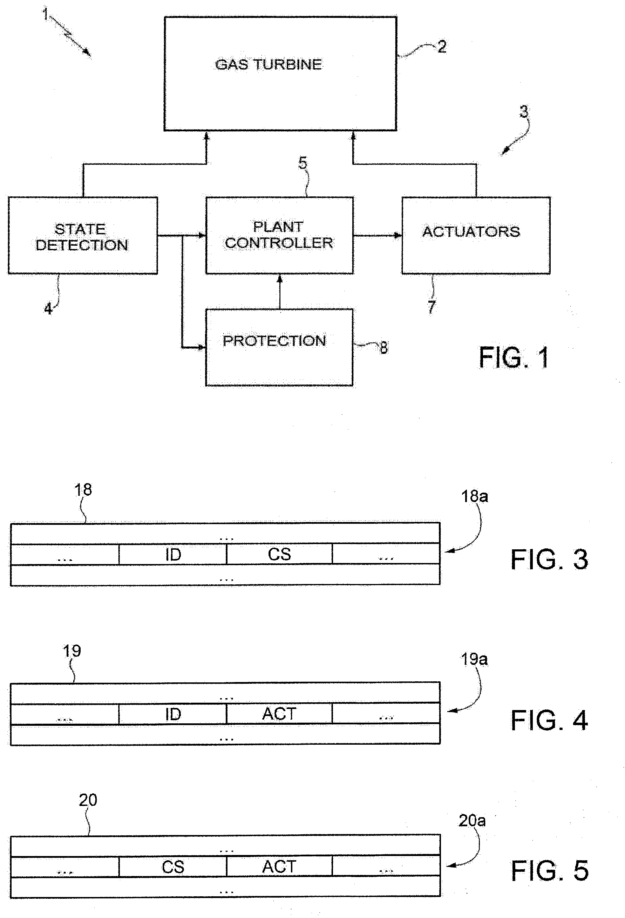

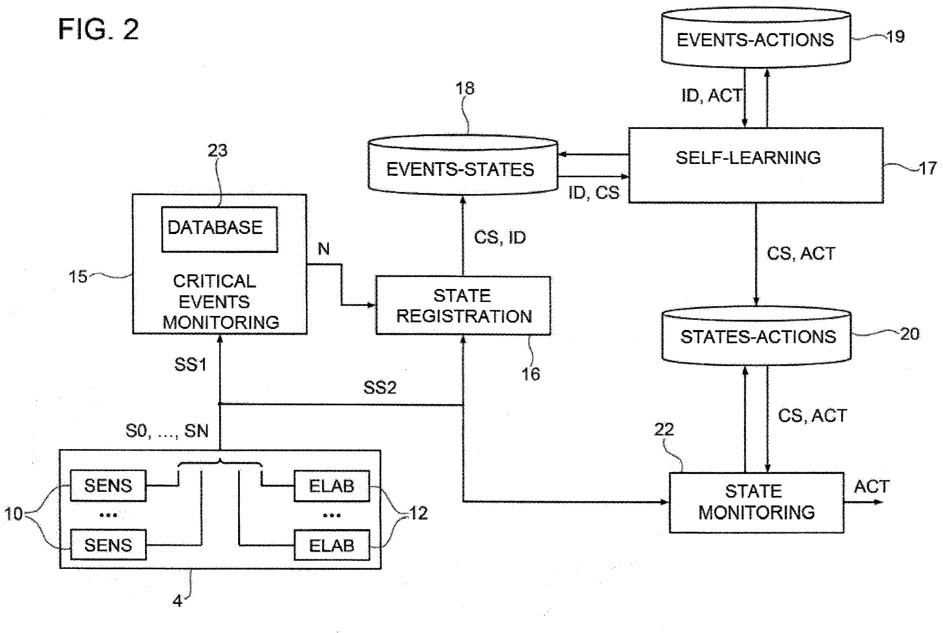

With reference to Figure 1, the number 1 indicates in its entirety a plant for the production of electricity comprising a gas turbine 2 and a control system 3. The control system 3 includes a state detection stage 4, a plant controller 5, actuators 7 and a protection stage 8. As shown in Figure 2, the state detection stage 4 may comprise a plurality of sensors 10 and one or more processing modules 12 and is configured to provide a plurality of state signals S0, ..., SN representative of operational quantities relating to the gas turbine 2. The sensors 10 may include sensors of environmental conditions (temperature, pressure, air humidity) and sensors of operational quantities of the gas turbine 2, including, by way of non-limiting example, inlet and outlet pressure and temperature sensors, combustion chamber dynamic pressure and temperature sensors, load sensors, pollutant concentration sensors, fuel quality sensors, vibration sensors, particularly accelerometers, mechanically coupled to the combustion chamber casing, and so on.

The state signals S0, ..., SN can be generated directly by respective sensors 10 or processed and supplied by the processing modules 12. For example, some of the state signals S0, ..., SN can be obtained by analysing the frequency of mechanical vibrations signals and can be representative of vibration amplitudes in certain frequency bands. Other signals, representative of not directly measurable quantities (e.g. related to parameters of the combustion chamber), may be obtained by means of estimation procedures from measurements of other variables or by processing aggregates of state signals S0, ..., SN. For example, signals representative of the flame position can be obtained from the comparison of the state signals S0, ..., SN provided by temperature sensors coupled to heat-insulating tiles surrounding each burner of the combustion chamber of the gas turbine 2.

Values of at least a subset of the state signals S0, ..., SN define a state of the plant 1.

The plant controller 5 uses the state signals to determine the operation of the plant 1 through the actuators 7.

The protection stage 8 (Figure 2) comprises a critical events monitoring module 15, a state registration module 16, a self-learning module 17, an events-states database 18, an events-actions database 19, a states-actions database 20 and a state monitoring module 22.

The critical events monitoring module 15 receives a first subset SS1 of the state signals S0, ..., SN and is provided with a memory unit 23 storing conditions on the values of the state signals S0, ..., SN of the first subset SS1 which define respective critical events for the gas turbine 2. Each critical event may be defined by a condition on a single state signal S0, ..., SN or by interrelated conditions on a plurality of state signals S0, ..., SN. The conditions may therefore be expressed in terms of acceptability intervals of a single state signal SK or in terms of related acceptability intervals of combinations of state signals S0, ..., SN of the first subset SS1. For example, a critical event may be defined by the condition SK ∉ RK', RK' being an acceptability interval; or by SK > THK, THK being a maximum threshold value. A critical event may be defined by conditions that occur simultaneously on a plurality of state signals S0, ..., SN of the first subset SS1. For example, a critical event may be defined by the simultaneously verified conditions SJ ∉ RJ and SK ∉ RK", RJ and RK" being related acceptability intervals.

The state signals S0, ..., SN of the first subset SS1 may include, among others, signals representative of vibration amplitudes in certain frequency bands, signals representative of the flame position and signals representative of the levels of polluting emissions (for example, CO2 and NOx).

The critical events monitoring module 15 notifies to the state registration module 16 occurrences of detected critical events. The notification N contains an identifier ID of the type of detected critical event (for example, a label or the unfulfilled conditions resulting in the detection and notification).

The state registration module 16 receives a second subset SS2 of the state signals S0, ..., SN, and in response to the notification N of the occurrence of a critical event from the critical events monitoring module 15 it stores critical states CS from the plant 1 in the events-states database 18, associating to them the received indication of the type of detected critical event. The critical states CRS are defined by the values of the state signals S0, ..., SN of the second subset SS2 temporally related to the occurrence of critical events. In particular, the values of the state signals S0, ..., SN of the second subset SS2 recorded by the state registration module 16 may be instantaneous values at the time of the notification N of the occurrence of a critical event, preceding and temporarily stored instantaneous values, temporarily stored, or chronological series of values. The second subset SS2 of the state signals S0, ..., SN may include, among others, signals representative of the environmental conditions (temperature, pressure, humidity), signals representative of the operating point of the gas turbine 2, signals representative of the vibration conditions of the combustion chamber (e.g. acceleration signals and dynamic pressure signals) and signals representative of the fuel quality. The first subset SS1 and the second subset SS2 of the state signals S0, ..., SN are not necessarily mutually exclusive and may both be coincident with the totality of the state signals S0, ..., SN.

Therefore, the events-states database 18 contains a plurality of elements or records 18a wherein each occurrence of a critical event is associated with a critical state CS of the plant 1 defined by the corresponding values of the state signals S0, ..., SN of the second subset SS2 supplied by the state registration module 16 in response to the notification N (Figure 3).

The self-learning module 17 creates the states-actions database 20 starting from the contents of the events-states database 18 and of the events-actions database 19.

The events-actions database 19, which may be created on the basis of project data and experimental data, contains associations between types of critical events and corrective actions. The corrective actions may be defined as groups of instructions to be executed in response to the occurrence of respective critical events (the instruction execution can be entrusted to the plant controller 5). In particular, the corrective actions may include, by way of non-limiting example, changes to a load reference ("setpoint"), changes to an exhaust gas temperature reference, or direct interventions on the actuators 7, such as variations of the air flow rate or of the fuel flow rate supplied to the gas turbine 2.

The types of critical events may be defined by identifiers ID, for example those used also for the notifications of the critical events monitoring module 15 and inserted in the events-states database 18 (labels or unfulfilled conditions resulting in the critical events detection). In detail, the events-actions database 19 contains a plurality of elements 19a, each of which includes the identifier ID of a type of critical event and the corresponding corrective action ACT (Figure 4).

The self-learning module 17 associates the critical states CS of the plant 1 stored in the events-states database 18 with corresponding corrective actions ACT stored in the states-actions database 20 on the basis of associations between critical states CS of the plant 1 and occurrences of critical events defined in the events-states database 18 and associations between critical events and corrective actions ACT defined in the events-actions database 19.

The self-learning module 17 associates each critical state CS of the plant 1 defined in the events-states database 18 to a respective corrective action ACT (extracted from the states-actions database 20) that should be implemented in response to the detection of the critical event associated with the same critical state CS in the events-states database 18 (the association between a type of critical event and a critical state CS is established in the events-states database 18 after the occurrence of a critical event which caused a notification N of the critical events monitoring module 15, the recording of the critical state CS by the state registration module 16, the association of the type of critical event notified to the critical registered state CS and the inclusion in the events-states database 18 of an element containing the identifier ID of the critical event notified to the critical recorded state CS). The association between critical states CRS and corrective actions ACT is based on identifiers ID designating the types of critical events in the events-states database 18 and in the events-actions database 19. The result of the association made by the self-learning module is inserted in the states-actions database 20 in the form of a database element 20a (Figure 5) which contains a critical state CS (i.e. the values of the state signals S0, ..., SN of the second subset SS2 corresponding to the notification of the occurrence of a critical event) and a corrective action ACT associated with the critical state corresponding to the critical event.

The self-learning module 17 may be activated periodically or selectively in response to updates of the events-states database 18 or the events-actions database 19 (for example, inclusion of new elements or changes of existing elements). The state monitoring module 22 receives the state signals S0, ..., SN of the second subset SS2, namely the same state signals S0, ..., SN also supplied to the state registration module 16. The state monitoring module 22 compares a current state of the plant 1 with the critical states CS stored in the states-actions database 20. The current state of the plant 1 is defined by current values of the state signals S0, ..., SN of the second subset SS2 received by the state monitoring module 22. More precisely, the current state of the plant 1 can be defined by single values or by chronological series of the state signals S0, ..., SN. If the state monitoring module 22 finds that the current state of the plant 1 matches one of the critical states stored in the states-actions database 20, the instructions defining the corrective action associated to the critical state are extracted from the states-actions database 20 and sent to the plant controller 5. The plant controller 5 executes the received instructions promptly and with high priority.

The described control system 3 improves the prevention of critical events that may negatively affect the performance and/or the structural integrity of the gas turbine 2, or that may result in a non-compliance with laws and regulations, for example with regard to polluting emissions or to the participation in the network frequency regulation. The control system 3, in fact, correlates the occurrence of critical events to certain critical states of the plant 1 and performs corrective actions as soon as the current state of the plant 1 corresponds to a critical state. The critical states are early indicators of the occurrence of critical events. Critical events, in fact, normally do not occur suddenly, but when the plant 1 remains in a given state for a period of time or after a progressive approach to a critical state. The control system 3 is then able to implement corrective actions for protecting the plant 1 generally in advance with respect to the occurrence of critical events, whose adverse effects can therefore be avoided or at least mitigated due to a quick reaction.

The ability to record single values or chronological series of state signals in a desired chronological relationship with respect to the detected occurrences of critical events makes the control system 3 flexible in defining the states related to critical events. In turn, this type of flexibility improves the time of intervention in case of emergency without jeopardising the performance due to a false positive (i.e. the recognition of states that are identified as critical, but that do not necessarily give rise to critical events).

Thanks to the operation in self-learning mode, the intervention conditions (with protective corrective actions) may be adapted to the actual behaviour of the plant 1. The occurrence of critical events may in fact not coincide, in practice, with the circumstances and the states of the plant 1 forecast in the project. In any event, the overall operating conditions of the plant 1 tend to change over time, for example because of the aging and wear of the components. The control system 3 responds to the changes of the project parameters due to the unavoidable tolerances as well as to the medium- and long-term changes of the operating parameters.

Finally, it is evident that the described control system and method may be modified and varied without departing from the scope of the present invention, as defined in the appended claims.

## Claims

1. A control system of a gas (2) turbine comprising:
a state detection stage (4), providing state signals (S0, ..., SN) representing respective operational quantities of the gas turbine (2);
a first monitoring module (15), receiving a first subset (SS1) of the state signals (S0, ..., SN) and configured to detect occurrences of critical events as a function of values of the state signals (S0, ..., SN) of the first subset (SS1);
a state registration module (16), receiving a second subset (SS2) of the state signals (S0, ..., SN) and configured to associate critical states (CS) to the occurrences of critical events detected by the first monitoring module (15), the critical states (CS) being defined by respective values of the state signals (S0, ..., SN) of the second subset (SS2), the respective values preceding occurrences of the critical events and temporarily stored;
a first database (19), defining associations between identifiers (ID) of critical events and corrective actions (ACT) defined by groups of instructions to be executed in response to occurrences of respective critical events;
a self-learning module (17), configured to correlate critical states (CS) and corrective actions (ACT) as a function of the associations between critical states (CS) and critical events produced by the state registration module (16) and of the associations between corrective actions (ACT) and critical events contained in the first database (19).

2. The control system according to claim 1, wherein the first database (19) contains a plurality of respective database items including each an identifier (ID) of a critical event, and at least one corresponding corrective action (ACT).

3. The control system according to claim 2, comprising a second database (18) defining associations between the critical states (CS) and the occurrences of the critical events detected by the first monitoring module (15).

4. The control system according to claim 3, wherein the second database (18) contains a plurality of respective database items including each the identifier (ID) of a critical event and a corresponding critical state (CS).

5. The control system according to claim 3 or 4, wherein the self-learning module (17) is configured to correlate the critical states (CS) and the corrective actions (ACT) as a function of the contents of the first database (19) and the contents of the second database (18).

6. The control system according to any one of claims 3 to 5, wherein the self-learning module (17) is configured to correlate the critical states (CS) and the corrective actions (ACT) on the basis of the identifiers (ID) of the critical events.

7. The control system according to any one of claims 3 to 6, comprising a third database (20) defining associations between the critical states (CS) and the corrective actions (ACT).

8. The control system according to claim 7, wherein the third database (20) contains a plurality of respective database items including each a critical state (CS) and a corresponding corrective action (ACT).

9. The control system according to claim 7 or 8, comprising a state monitoring module (22) receiving the state signals (S0, ..., SN) of the second subset (SS2) and configured to compare a current state, defined by current values of the state signals (S0, ..., SN) of the second subset (SS2), with the critical states (CS) stored in the third database (20).

10. The control system according to claim 9, wherein the state monitoring module (22) is configured to extract the corrective actions (ACT) from the third database (20) if the critical states associated with the corrective actions (ACT) match the current state.

11. The control system according to claim 10, comprising a plant controller (5), the state monitoring module (22) being configured to send the corrective actions (ACT) extracted from the third database (20) to the plant controller (5) and the plant controller (5) being configured to execute the corrective actions (ACT).

12. The control system according to any one of the preceding claims, wherein the first monitoring module (15) is configured to notify the detected occurrence of critical events to the state registration module (16).

13. The control system according to claim 12 depending on claim 2, wherein the first monitoring module (15) is configured to notify the identifiers (ID) of the detected critical events to the state registration module (16).

14. A plant for the production of electricity, comprising a gas turbine (2) and a control system (3) according to any one of the preceding claims coupled to the gas turbine (2).

15. The plant according to claim 14, wherein the state signals (S0, ..., SN) are representative of respective operational quantities relating to the operation of the gas turbine (2).

16. A method for controlling a gas turbine plant comprising a gas turbine (2) and a control system (3) coupled to the gas turbine (2);
the method comprising:
providing state signals (S0, ..., SN) representative of respective operational quantities relating to the operation of the gas turbine (2);
detecting occurrences of critical events as a function of values of state signals (S0, ..., SN) of a first subset (SS1) of the state signals (S0, ..., SN);
associating critical states (CS) to the detected occurrences of critical events, the critical states (CS) being defined by respective values of state signals (S0, ..., SN) of a second subset (SS2) of the state signals (S0, ..., SN), the respective values preceding occurrences of the critical events and temporarily stored;
storing in a first database (19) associations between identifiers (ID) of critical events and corrective actions (ACT) defined by groups of instructions to be executed in response to occurrences of respective critical events;
correlating critical states (CS) and corrective actions (ACT) as a function of the associations between critical states (CS) and critical events and of the associations between corrective actions (ACT) and critical events contained in the first database (19).

17. The method according to claim 16, wherein associating critical states (CS) to the detected occurrences of the critical events comprises storing in a second database (18) associations between the critical states (CS) and the occurrences of the critical events.

18. The method according to claim 17, wherein correlating critical states (CS) and corrective actions (ACT) comprises storing in a third database (20) associations between the critical states (CS) and the corrective actions (ACT).

19. The method according to claim 18, comprising comparing a current state, defined by current values of the state signals (S0, ..., SN) of the second subset (SS2) with the critical states (CS) stored in the third database (20) and extracting the corrective actions (ACT) from the third database (20) if the critical states associated with the corrective actions (ACT) match the current state.

## Patentansprüche

1. Steuersystem einer Gasturbine (2), umfassend:
eine Zustandserfassungsstufe (4), die Zustandssignale (S0, ...., SN) bereitstellt, die jeweilige Betriebsgrößen der Gasturbine (2) darstellen;
ein erstes Überwachungsmodul (15), das eine erste Teilmenge (SS1) der Zustandssignale (S0, ...., SN) empfängt und dafür konfiguriert ist, das jeweilige Auftreten kritischer Ereignisse als eine Funktion von Werten der Zustandssignale (S0, ...., SN) der ersten Teilmenge (SS1) zu erfassen;
ein Zustandsregistrierungsmodul (16), das eine zweite Teilmenge (SS2) der Zustandssignale (S0, ...., SN) empfängt und dafür konfiguriert ist, kritische Zustände (CS) dem jeweiligen Auftreten kritischer Ereignisse zuzuordnen, die vom ersten Überwachungsmodul (15) erfasst werden, wobei die kritischen Zustände (CS) durch entsprechende Werte der Zustandssignale (S0, ...., SN) der zweiten Teilmenge (SS2) definiert sind, wobei die jeweiligen Werte dem jeweiligen Auftreten der kritischen Ereignisse vorausgehen und vorübergehend gespeichert werden;
eine erste Datenbank (19), die Zuordnungen zwischen Kennungen (ID) kritischer Ereignisse und Abhilfemaßnahmen (ACT), die durch Gruppen von Anweisungen definiert sind, die als Reaktion auf das jeweilige Auftreten von jeweiligen kritischen Ereignissen auszuführen sind, definiert;
ein selbstlernendes Modul (17), das dafür konfiguriert ist, kritische Zustände (CS) und Abhilfemaßnahmen (ACT) als eine Funktion der Zuordnungen zwischen kritischen Zuständen (CS) und kritischen Ereignissen, die durch das Zustandsregistrierungsmodul (16) erzeugt werden, und der Zuordnungen zwischen Abhilfemaßnahmen (ACT) und kritischen Ereignissen, die in der ersten Datenbank (19) enthalten sind, zu korrelieren.

2. Steuersystem nach Anspruch 1, wobei die erste Datenbank (19) mehrere jeweilige Datenbankelemente umfasst, die jeweils eine Kennung (ID) eines kritischen Ereignisses und wenigstens eine entsprechende Abhilfemaßnahme (ACT) enthalten.

3. Steuersystem nach Anspruch 2, eine zweite Datenbank (18) umfassend, die Zuordnungen zwischen den kritischen Zuständen (CS) und dem jeweiligen Auftreten der von dem ersten Überwachungsmodul (15) erfassten kritischen Ereignisse definiert.

4. Steuersystem nach Anspruch 3, wobei die zweite Datenbank (18) mehrere jeweilige Datenbankelemente umfasst, die jeweils die Kennung (ID) eines kritischen Ereignisses und einen entsprechenden kritischen Zustand (CS) enthalten.

5. Steuersystem nach Anspruch 3 oder 4, wobei das selbstlernende Modul (17) dafür konfiguriert ist, die kritischen Zustände (CS) und die Abhilfemaßnahmen (ACT) als eine Funktion des Inhalts der ersten Datenbank (19) und des Inhalts der zweiten Datenbank (18) zu korrelieren.

6. Steuersystem nach einem der Ansprüche 3 bis 5, wobei das selbstlernende Modul (17) dafür konfiguriert ist, die kritischen Zustände (CS) und die Abhilfemaßnahmen (ACT) auf der Grundlage der Kennungen (ID) der kritischen Ereignisse zu korrelieren.

7. Steuersystem nach einem der Ansprüche 3 bis 6, eine dritte Datenbank (20) umfassend, die Zuordnungen zwischen den kritischen Zuständen (CS) und den Abhilfemaßnahmen (ACT) definiert.

8. Steuersystem nach Anspruch 7, wobei die dritte Datenbank (20) mehrere jeweilige Datenbankelemente umfasst, die jeweils einen kritischen Zustand (CS) und eine entsprechende Abhilfemaßnahme (ACT) enthalten.

9. Steuersystem nach Anspruch 7 oder 8, ein Zustandsüberwachungsmodul (22) umfassend, das die Zustandssignale (S0, ...., SN) der zweiten Teilmenge (SS2) empfängt und dafür konfiguriert ist, einen aktuellen Zustand, der durch aktuelle Werte der Zustandssignale (S0, ...., SN) der zweiten Teilmenge (SS2) definiert ist, mit den in der dritten Datenbank (20) gespeicherten kritischen Zuständen (CS) zu vergleichen.

10. Steuersystem nach Anspruch 9, wobei das Zustandsüberwachungsmodul (22) dafür konfiguriert ist, die Abhilfemaßnahmen (ACT) aus der dritten Datenbank (20) zu extrahieren, wenn die den Abhilfemaßnahmen (ACT) zugeordneten kritischen Zustände mit dem aktuellen Zustand übereinstimmen.

11. Steuersystem nach Anspruch 10, eine Anlagensteuervorrichtung (5) umfassend, wobei das Zustandsüberwachungsmodul (22) dafür konfiguriert ist, die aus der dritten Datenbank (20) extrahierten Abhilfemaßnahmen (ACT) an die Anlagensteuervorrichtung (5) zu senden, und die Anlagensteuervorrichtung (5) dafür konfiguriert ist, die Abhilfemaßnahmen (ACT) auszuführen.

12. Steuersystem nach einem der vorangehenden Ansprüche, wobei das erste Überwachungsmodul (15) dafür konfiguriert ist, das erfasste Auftreten kritischer Ereignisse an das Zustandsregistrierungsmodul (16) zu melden.

13. Steuersystem nach Anspruch 12 abhängig von Anspruch 2, wobei das erste Überwachungsmodul (15) dafür konfiguriert ist, die Kennungen (ID) der erfassten kritischen Ereignisse an das Zustandsregistrierungsmodul (16) zu melden.

14. Anlage zur Stromerzeugung, eine Gasturbine (2) und ein mit der Gasturbine (2) gekoppeltes Steuersystem (3) nach einem der vorhergehenden Ansprüche umfassend.

15. Anlage nach Anspruch 14, wobei die Zustandssignale (S0, ...., SN) repräsentativ für jeweilige Betriebsgrößen sind, die sich auf den Betrieb der Gasturbine (2) beziehen.

16. Verfahren zum Steuern einer Gasturbinenanlage, eine Gasturbine (2) und ein mit der Gasturbine (2) gekoppeltes Steuersystem (3) umfassend;
wobei das Verfahren umfasst:
Bereitstellen von Zustandssignalen (S0, ...., SN), die repräsentativ für jeweilige Betriebsgrößen sind, die sich auf den Betrieb der Gasturbine (2) beziehen;
Erfassen des jeweiligen Auftretens kritischer Ereignisse als eine Funktion von Werten der Zustandssignale (S0, ...., SN) einer ersten Teilmenge (SS1) der Zustandssignale (S0, ...., SN);
Zuordnen von kritischen Zuständen (CS) zu dem erfassten jeweiligen Auftreten kritischer Ereignisse, wobei die kritischen Zustände (CS) durch entsprechende Werte der Zustandssignale (S0, ...., SN) einer zweiten Teilmenge (SS2) der Zustandssignale (S0, ...., SN) definiert sind, wobei die jeweiligen Werte dem jeweiligen Auftreten der kritischen Ereignisse vorausgehen und vorübergehend gespeichert werden;
Speichern von Zuordnungen zwischen Kennungen (ID) kritischer Ereignisse und Abhilfemaßnahmen (ACT), die durch Gruppen von Anweisungen definiert sind, die als Reaktion auf das jeweilige Auftreten entsprechender kritischer Ereignisse auszuführen sind, in einer ersten Datenbank (19);
Korrelieren von kritischen Zuständen (CS) und von Abhilfemaßnahmen (ACT) als eine Funktion der Zuordnungen zwischen kritischen Zuständen (CS) und kritischen Ereignissen und der Zuordnungen zwischen Abhilfemaßnahmen (ACT) und kritischen Ereignissen, die in der ersten Datenbank (19) enthalten sind.

17. Verfahren nach Anspruch 16, wobei das Zuordnen kritischer Zustände (CS) zu dem erfassten jeweiligen Auftreten der kritischen Ereignisse das Speichern von Zuordnungen zwischen den kritischen Zuständen (CS) und dem jeweiligen Auftreten der kritischen Ereignisse in einer zweiten Datenbank (18) umfasst.

18. Verfahren nach Anspruch 17, wobei das Korrelieren von kritischen Zuständen (CS) und von Abhilfemaßnahmen (ACT) das Speichern von Zuordnungen zwischen den kritischen Zuständen (CS) und den Abhilfemaßnahmen (ACT) in einer dritten Datenbank (20) umfasst.

19. Verfahren nach Anspruch 18, umfassend das Vergleichen eines aktuellen Zustands, der durch aktuelle Werte der Zustandssignale (S0, ....., SN) der zweiten Teilmenge (SS2) definiert ist, mit den in der dritten Datenbank (20) gespeicherten kritischen Zuständen (CS) und das Extrahieren der Abhilfemaßnahmen (ACT) aus der dritten Datenbank (20), wenn die den Abhilfemaßnahmen (ACT) zugeordneten kritischen Zustände mit dem aktuellen Zustand übereinstimmen.

## Revendications

1. Système de commande d'une turbine à gaz (2) comprenant :
un étage de détection d'état (4), fournissant des signaux d'état (S0, ..., SN) représentant des quantités opérationnelles respectives de la turbine à gaz (2) ;
un premier module de surveillance (15), recevant un premier sous-ensemble (SS1) des signaux d'état (S0, ..., SN), et configuré de manière à détecter des occurrences d'événements critiques en fonction de valeurs des signaux d'état (S0, ..., SN) du premier sous-ensemble (SS1) ;
un module d'enregistrement d'état (16), recevant un second sous-ensemble (SS2) des signaux d'état (S0, ..., SN), et configuré de manière à associer des états critiques (CS) aux occurrences d'événements critiques détectées par le premier module de surveillance (15), les états critiques (CS) étant définis par des valeurs respectives des signaux d'état (S0, ..., SN) du second sous-ensemble (SS2), les valeurs respectives précédant des occurrences des événements critiques, et étant temporairement stockés ;
une première base de données (19), définissant des associations entre des identificateurs (ID) d'événements critiques et des actions correctives (ACT) définies par des groupes d'instructions devant être exécutés en réponse à des occurrences d'événements critiques respectifs ;
un module d'auto-apprentissage (17), configuré de manière à corréler des états critiques (CS) et des actions correctives (ACT) en fonction des associations entre des états critiques (CS) et des événements critiques, produites par le module d'enregistrement d'état (16) et des associations entre des actions correctives (ACT) et des événements critiques, contenues dans la première base de données (19).

2. Système de commande selon la revendication 1, dans lequel la première base de données (19) contient une pluralité d'éléments de base de données respectifs incluant chacun un identificateur (ID) d'un événement critique, et au moins une action corrective correspondante (ACT).

3. Système de commande selon la revendication 2, comprenant une deuxième base de données (18) définissant des associations entre les états critiques (CS) et les occurrences des événements critiques détectées par le premier module de surveillance (15).

4. Système de commande selon la revendication 3, dans lequel la deuxième base de données (18) contient une pluralité d'éléments de base de données respectifs incluant chacun l'identificateur (ID) d'un événement critique et un état critique (CS) correspondant.

5. Système de commande selon la revendication 3 ou 4, dans lequel le module d'auto-apprentissage (17) est configuré de manière à corréler les états critiques (CS) et les actions correctives (ACT) en fonction des contenus de la première base de données (19) et des contenus de la deuxième base de données (18).

6. Système de commande selon l'une quelconque des revendications 3 à 5, dans lequel le module d'auto-apprentissage (17) est configuré de manière à corréler les états critiques (CS) et les actions correctives (ACT) sur la base des identificateurs (ID) des événements critiques.

7. Système de commande selon l'une quelconque des revendications 3 à 6, comprenant une troisième base de données (20) définissant des associations entre les états critiques (CS) et les actions correctives (ACT).

8. Système de commande selon la revendication 7, dans lequel la troisième base de données (20) contient une pluralité d'éléments de base de données respectifs incluant chacun un état critique (CS) et une action corrective correspondante (ACT).

9. Système de commande selon la revendication 7 ou 8, comprenant un module de surveillance d'état (22) recevant les signaux d'état (S0, ..., SN) du second sous-ensemble (SS2), et configuré de manière à comparer un état en cours, défini par des valeurs en cours des signaux d'état (S0, ..., SN) du second sous-ensemble (SS2), aux états critiques (CS) stockés dans la troisième base de données (20).

10. Système de commande selon la revendication 9, dans lequel le module de surveillance d'état (22) est configuré de manière à extraire les actions correctives (ACT) de la troisième base de données (20) si les états critiques associés aux actions correctives (ACT) correspondent à l'état en cours.

11. Système de commande selon la revendication 10, comprenant un contrôleur d'installation (5), dans lequel le module de surveillance d'état (22) est configuré de manière à envoyer les actions correctives (ACT), extraites de la troisième base de données (20), au contrôleur d'installation (5), et dans lequel le contrôleur d'installation (5) est configuré de manière à exécuter les actions correctives (ACT).

12. Système de commande selon l'une quelconque des revendications précédentes, dans lequel le premier module de surveillance (15) est configuré de manière à notifier l'occurrence d'événements critiques détectée au module d'enregistrement d'état (16).

13. Système de commande selon la revendication 12, lorsqu'elle dépend de la revendication 2, dans lequel le premier module de surveillance (15) est configuré de manière à notifier les identificateurs (ID) des événements critiques détectés, au module d'enregistrement d'état (16).

14. Installation de production d'électricité, comprenant une turbine à gaz (2), et un système de commande (3) selon l'une quelconque des revendications précédentes, couplé à la turbine à gaz (2).

15. Installation selon la revendication 14, dans laquelle les signaux d'état (S0, ..., SN) sont représentatifs de quantités opérationnelles respectives connexes au fonctionnement de la turbine à gaz (2).

16. Procédé de commande d'une installation de turbine à gaz comprenant une turbine à gaz (2), et un système de commande (3) couplé à la turbine à gaz (2) ;
le procédé comprenant les étapes ci-dessous consistant à :
fournir des signaux d'état (S0, ..., SN) représentatifs de quantités opérationnelles respectives connexes au fonctionnement de la turbine à gaz (2) ;
détecter des occurrences d'événements critiques en fonction de valeurs de signaux d'état (S0, ..., SN) d'un premier sous-ensemble (SS1) des signaux d'état (S0, ..., SN) ;
associer des états critiques (CS) aux occurrences d'événements critiques détectées, les états critiques (CS) étant définis par des valeurs respectives de signaux d'état (S0, ..., SN) d'un second sous-ensemble (SS2) des signaux d'état (S0, ..., SN), les valeurs respectives précédant des occurrences des événements critiques, et étant stockés temporairement ;
stocker, dans une première base de données (19), des associations entre des identificateurs (ID) d'événements critiques et des actions correctives (ACT) définies par des groupes d'instructions devant être exécutés en réponse à des occurrences d'événements critiques respectifs ;
corréler des états critiques (CS) et des actions correctives (ACT) en fonction des associations entre des états critiques (CS) et des événements critiques et des associations, entre des actions correctives (ACT) et des événements critiques, contenues dans la première base de données (19).

17. Procédé selon la revendication 16, dans lequel l'étape d'association d'états critiques (CS) aux occurrences d'événements critiques détectées, comprend l'étape consistant à stocker, dans une deuxième base de données (18), des associations entre les états critiques (CS) et les occurrences des événements critiques.

18. Procédé selon la revendication 17, dans lequel l'étape de corrélation d'états critiques (CS) et d'actions correctives (ACT) comprend l'étape consistant à stocker, dans une troisième base de données (20), des associations entre les états critiques (CS) et les actions correctives (ACT).

19. Procédé selon la revendication 18, comprenant l'étape consistant à comparer un état en cours, défini par des valeurs en cours des signaux d'état (S0, ..., SN) du second sous-ensemble (SS2), aux états critiques (CS) stockés dans la troisième base de données (20), et l'étape consistant à extraire les actions correctives (ACT) de la troisième base de données (20) si les états critiques associés aux actions correctives (ACT) correspondent à l'état en cours.
